(19) Europäisches Patentamt
European Patent Office
Office européen des brevets

(11) **EP 1 682 873 B1**

(12) **FASCICULE DE BREVET EUROPEEN**

(45) Date de publication et mention
de la délivrance du brevet:
**04.04.2007  Bulletin 2007/14**

(21) Numéro de dépôt: **04805326.8**

(22) Date de dépôt: **28.10.2004**

(51) Int Cl.:
*G01N 21/25* (2006.01)    *G01J 3/46* (2006.01)

(86) Numéro de dépôt international:
**PCT/FR2004/002769**

(87) Numéro de publication internationale:
**WO 2005/043135 (12.05.2005 Gazette 2005/19)**

(54) **PROCEDE ET DISPOSITIF POUR CONTROLER LA COULEUR D'UN SUPPORT**

VERFAHREN UND VORRICHTUNG ZUR KONTROLLE DER FARBE EINES TRÄGERS

METHOD AND DEVICE FOR CONTROLLING THE COLOR OF A SUPPORT

(84) Etats contractants désignés:
**AT BE BG CH CY CZ DE DK EE ES FI FR GB GR
HU IE IT LI LU MC NL PL PT RO SE SI SK TR**

(30) Priorité: **29.10.2003  FR 0312633**

(43) Date de publication de la demande:
**26.07.2006  Bulletin 2006/30**

(73) Titulaire: **Arjowiggins**
**92130 Issy Les Moulineaux (FR)**

(72) Inventeur: **VALLARI, Marietta**
**F-88380 Arches (FR)**

(74) Mandataire: **Carré, Claudine Bernadette**
**Arjo Wiggins**
**117, quai du Président Roosevelt**
**92442 Issy-les-Moulineaux Cedex (FR)**

(56) Documents cités:
**EP-A- 0 228 347**

**Description**

L'invention concerne un procédé et un dispositif pour contrôler la couleur d'un support, notamment un papier.

Elle concerne, en particulier, un procédé et un dispositif pour contrôler la couleur d'un papier coloré utilisé dans la fabrication des stratifiés décoratifs.

La préparation de supports colorés nécessite généralement l'addition de colorants ou de pigments au matériau de base du support, préalablement à sa formation obtenue à l'aide d'un ou plusieurs dispositifs adaptés.

Dans le cadre d'un papier coloré, il s'agit en fait d'ajouter à la pâte à papier, avant la caisse de tête, la proportion de colorants et.de pigments nécessaires, préalablement à la formation du papier sur machine à papier.

Le problème dans ce genre de méthode de coloration effectuée en amont de la fabrication du support lui-même est la difficulté de prévoir la couleur du support final en fonction de la quantité de substances colorantes ajoutées.

La difficulté réside dans le passage d'un état humide à un état sec pour le support.

Ce passage entraîne une variation importante des caractéristiques optiques du support, et notamment de son rendu colorimétrique.

Dans le cas d'un stratifié décoratif, cette difficulté est accentuée du fait que le papier coloré obtenu en sortie de machine à papier est imprégné, par la suite, de résine thermodurcissable, avant d'être pressé à chaud avec les autres couches constitutives du stratifié décoratif.

La couleur du papier varie donc dans un premier temps lors de son passage sur machine à papier : le papier perdant de l'eau a tendance à perdre en luminosité.

Au contraire, lors de son imprégnation de résine, le papier décor gagnera de la luminosité.

On constate au final que le papier décor dans son état humide présente un aspect coloré assez semblable à celui de la plaque stratifiée formée à partir de celui-ci.

Ce phénomène n'ayant pas été exploité par les industriels papetiers, la recherche d'une couleur spécifique pour la plaque stratifiée elle-même suit actuellement le même schéma opérationnel que celui effectué pour le papier lui-même, ou que celui effectué pour un support coloré quelconque.

Ce schéma opérationnel se base essentiellement sur le principe d'une comparaison colorimétrique du support final avec un support de référence choisi au préalable.

Cette méthode de contrôle de couleur opérée en aval entraîne de ce fait une perte de matière, de temps et d'énergie pour chacun des essais infructueux qu'il a fallu effectuer avant d'aboutir au résultat escompté.

Même si cette méthode reste valable et suffisante pour des procédés de coloration de support pour lesquels la gamme des couleurs envisagées est restreinte, elle n'est plus adaptée pour les entreprises travaillant dans la coloration de support, pour lesquelles les gammes de couleurs varient souvent et pour lesquelles les exigences des clients sont de plus en plus fortes.

Ceci est notamment le cas de la production de plaques stratifiées décoratives.

La Demanderesse s'est donc intéressée à remédier à ce problème.

Dans l'art antérieur, des solutions ont été apportées pour améliorer ce contrôle de couleur en ligne.

La majorité d'entre elles mettent en oeuvre des instruments de mesure de couleur, de type spectrocolorimètre ou colorimètre.

L'avantage de ces appareils est de pouvoir chiffrer les données colorimétriques mesurées.

L'opérateur machine ou le client peut donc se rapporter à une même référence chiffrée non discutable pour évaluer l'écart entre le support effectivement obtenu en fin de production et le modèle à atteindre.

Toutefois, l'utilisation de ce type d'instruments de mesure de couleur n'a pas dans la pratique modifié sensiblement les méthodes de contrôle de couleur pratiquées jusqu'à présent à ce niveau. Plusieurs raisons en sont la cause.

L'une des raisons est que l'appréciation des couleurs sous forme de mesures chiffrées, telle que la fournissent les instruments de mesure, ne correspond pas toujours aux attentes des clients.

Ces derniers préfèrent juger à l'oeil, par eux-mêmes, de la bonne adéquation entre la couleur du support obtenu et celle du modèle désiré, malgré le risque important d'appréciations erronées ou influencées par des facteurs physiologiques propres à l'observateur lui-même. De ce fait, les instruments de mesure actuels ont plus un rôle de vérificateur d'appoint placé en fin de chaîne, en complément d'une vérification opérée à l'oeil par une personne compétente, que le rôle d'un véritable dispositif de régulation de couleur placé le plus amont possible dans la chaîne de production.

Une autre raison justifiant un certain désintérêt pour ce type de mesures chiffrées de couleur est la difficulté de fournir une information chromatique qui soit à la fois complète, fidèle et simple.

La perception des couleurs dépend des conditions d'observation, en particulier de la nature de l'illuminant et de l'objet.

En supposant que l'on travaille toujours avec le même illuminant pour opérer les mesures de couleur à l'aide desdits appareils de mesure de couleur, il reste que les caractéristiques relatives du support pouvant influer sur la perception de sa couleur sont difficilement maîtrisables.

En l'occurrence, dans le cas d'un support papier, la mesure de sa couleur variera fortement selon que le papier est humide, c'est-à-dire dans la partie humide de la machine à papier avant le séchage du papier, ou sec, c'est-à-dire après le séchage.

Cette différence s'explique du fait que l'indice de réfraction de l'eau, égal à 1,3, est supérieur à l'indice de réfraction de l'air, égal à 1.

Un contrôle de couleur du support effectué en partie humide de la machine ne permet donc pas de déduire de manière simple la couleur du support en fin de cycle de fabrication.

De ce fait, le contrôle de couleur effectué en ligne, notamment dans la partie amont du processus de fabrication du support coloré, a été limité, jusqu'à présent, à prévenir d'éventuels écarts colorimétriques constatés en cours de fabrication, et corrigés en retour par l'opérateur machine.

Un dernier problème qui explique également la difficulté à implanter un véritable contrôle de couleur en ligne vient du système de représentation des couleurs utilisé par la majorité des colorimètres ou spectrocolorimètres du marché.

La plupart des appareils de mesure de couleur, par exemple celui décrit dans la demande européenne EP 228 347 A, utilisent, pour représenter une couleur, des espaces colorimétriques à trois dimensions, notamment de type (L, a,b) ou (X, Y, Z).

Les coordonnées chromatiques d'une couleur donnée dans ces divers espaces colorimétriques sont obtenues en fait à partir de calculs complexes ayant comme seule variable : la réflectance mesurée dans le spectre du visible.

Les formules de calcul correspondantes et autres tableaux de valeurs spécifiques à chacun des espaces colorimétriques actuellement en vigueur ont fait l'objet d'une abondante littérature spécialisée ; l'homme du métier pourra se référer notamment à la norme française NF X 08-000 et au document « Prédiction of paper color : a process simulation approach » publié en 1993 par l'Institute of Paper Science and Technology.

L'appareil de mesure de couleur établit de la sorte un spectre de réflectance de la couleur mesurée et, à l'aide d'un logiciel de calcul contenant l'ensemble des formules de calcul propres à un espace colorimétrique donné, calcule et affiche les coordonnées colorimétriques de la couleur mesurée dans ledit espace colorimétrique.

Le problème majeur de ce type d'espace colorimétrique est leur manque d'uniformité.

La nature intrinsèquement non euclidienne de ces espaces colorimétriques induit une variabilité de la valeur de l'élément métrique d'un point à l'autre de ces espaces.

De ce fait, lors du calcul d'un écart colorimétrique entre deux couleurs données en utilisant une formule théorique ayant pour variables les données colorimétriques de chacune des couleurs, le résultat trouvé présente souvent une erreur difficilement appréciable.

L'opérateur machine se basant sur cette valeur pour effectuer ces corrections de couleur, en particulier pour doser les quantités de colorants à ajouter en amont du processus de coloration, il doit souvent procéder par ajustements empiriques pour trouver le dosage adéquat.

A ce titre, il est connu de faire appel à certains logiciels de calcul, intégrés aux dispositifs de contrôle des spectrocolorimètres eux-mêmes, pour déterminer les corrections à apporter à un dosage de pigments donnés en fonction de l'écart colorimétrique et des caractéristiques des pigments utilisées, ces caractéristiques ayant été enregistrées au préalable dans une base de donnée.

L'utilisation d'un spectrocolorimètre et de son dispositif de contrôle associé ne permet donc pas actuellement de corriger en ligne le processus de coloration de manière à atteindre la coloration souhaitée, si on ne prévoit pas une intervention d'un spécialiste humain capable, de part son expérience, de moduler les résultats chiffrés donnés par le spectrocolorimètre.

La Demanderesse a donc cherché à remédier à ces problèmes de l'art antérieur dans sa recherche d'une méthode de correction de couleur en ligne utilisée dans un procédé générale d'obtention d'un support coloré.

Dans un premier temps, elle a décidé d'utiliser une méthode de mesure de couleur qui fasse abstraction de l'observateur et de l'illuminant

A ce titre, elle a eu l'idée de ne pas utiliser les valeurs colorimétriques respectives de la couleur dans un espace colorimétrique particulier, mais d'utiliser uniquement le spectre de réflectance de ladite couleur.

L'opération de mesure de couleur consiste en fait à déterminer dans une zone de longueur d'onde réduite du domaine du visible, c'est-à-dire entre environ 400 et 700 nm, la valeur de la réflectance mesurée à l'aide d'un spectrocolorimètre et à l'enregistrer.

Cette mesure se fait généralement sur des zones d'égales largeurs, en particulier de 10 nm de large.

L'avantage de cette méthode est d'éviter de faire intervenir l'illuminant dans les calculs relatifs aux données colorimétriques et donc de pouvoir comparer sans risque d'erreur possible les valeurs de réflectance du support en amont du processus de coloration avec les valeurs de réflectance du support en aval du processus de coloration.

Consciente toutefois qu'il est difficile d'établir une réelle corrélation entre la couleur du support coloré au début du processus de coloration et la couleur du support coloré à la fin du processus de coloration, notamment du fait de paramètres spécifiques au support lui-même et au dispositif utilisé lors de la fabrication du support coloré, la Demanderesse a eu l'idée de faire intervenir une fonction mathématique de deuxième ordre à coefficients variables que l'on détermine au préalable pour chaque zone de longueur d'onde en utilisant un échantillon de supports colorés de référence.

Pour chacun de ces supports et pour chaque zone de longueur d'onde, la Demanderesse a ainsi mesuré la valeur de la réflectance du support coloré au cours du processus de fabrication et la valeur de la réflectance du support coloré à la fin du processus de fabrication.

En choisissant des supports colorés possédant des teintes permettant de couvrir de façon homogène l'ensemble du spectre visible, elle a pu déterminer par corrélation une fonction de deuxième ordre spécifique pour chacune des zones de longueur d'onde du spectre visible, fonction donnant la réflectance du support au cours du processus de fabrication en fonction de la réflectance du support à la fin du processus de fabrication.

A l'aide de théories existantes et d'expériences préalables effectuées en laboratoire, la Demanderesse a pu constater que cette fonction permet de tenir compte des paramètres énoncés précédemment et ne dépend pas de l'appareil de mesure utilisé.

Cette fonction mathématique sert ensuite à calculer une réflectance prévisionnelle pour le support coloré en fin de processus de fabrication en appliquant la formule mathématique correspondante à la mesure de réflectance faite sur le support coloré au cours de son processus de fabrication.

En reconstituant ensuite le spectre de réflectance prévisionnelle de ce support virtuel, on peut ainsi prévoir la couleur de ce support à la fin de son processus de fabrication et ainsi déterminer l'écart colorimétrique probable entre ce support virtuel et le support cible désiré.

Cet écart colorimétrique doit permettre finalement de déterminer les corrections à envisager au niveau des dosages de colorant.

De cette manière, la Demanderesse propose un véritable procédé de contrôle de couleur en ligne applicable à tout type de support et à tout type de processus de coloration.

Par ailleurs, l'invention présente un intérêt supplémentaire dans le cas des supports colorés ayant subi une double transformation, par exemple par passage d'un état humide à un état sec, puis par réimprégnation d'une autre substance avant un séchage ultérieur.

Ce cas particulier a été étudié plus spécifiquement par la Demanderesse de part ses activités de producteur de feuilles papetières décoratives destinées à être intégrées dans des plaques stratifiées décoratives.

Les plaques stratifiées décoratives en couleur sont généralement préparées à partir d'un élément de base formant support, habituellement soit un panneau de particules, soit plusieurs feuilles de papier kraft, qui a été imprégné d'une résine thermodurcissable. Dans le cas des feuilles de papier kraft, après imprégnation du papier kraft par la résine, les feuilles sont séchées et coupées à la dimension convenable. On empile ensuite une pluralité de ces feuilles imprégnées de résine.

On place ensuite sur l'empilement de feuilles précitées ou sur le panneau de particules, une feuille décorative qui est généralement une feuille de papier pigmentée monocolore, la feuille décorative pouvant néanmoins comporter un motif imprimé à sa surface, et une feuille dite overlay transparente, destinée à protéger la feuille décorative.

Les constituants superposés du produit stratifié sont ensuite placés dans une presse de stratification et sont chauffés sous pression pour provoquer l'assemblage de l'ensemble et obtenir une structure unitaire.

La difficulté dans ce type de production est donc l'obtention d'une couleur bien déterminée, choisie au préalable par le client.

L'élément porteur de la couleur, la feuille décorative, présente en effet, à l'état sec, non imprégné, une couleur largement différente de celle de la plaque finale.

Il est donc nécessaire d'opérer des essais nombreux et coûteux, que ce soit en laboratoire ou sur machine, avant de trouver les quantités de pigments exactes et les réglages machine convenables permettant d'aboutir au résultat escompté.

Le passage de la feuille décorative d'un état humide à un état sec lors de son passage dans la machine à papier, suivi de sa réimprégnation avec une résine thermodurcissable et finalement de son séchage final ne facilite pas une détermination simple de la couleur de la plaque stratifiée finale connaissant celle de la feuille décorative, notamment aux premiers instants de la fabrication.

Le procédé proposé doit donc permettre de résoudre ce problème, ce qui devrait réduire de façon significative les arrêts machine et les pertes de matières premières.

L'objet de la présente invention est donc un procédé de contrôle de couleur en ligne utilisée lors d'un processus de formation d'un support coloré, dans lequel :

- dans une première étape, on mesure, pour un nombre N de bandes de longueurs d'onde comprises dans le spectre visible et pour un nombre P de support de référence, la réflectance $R_{ij}$, $1<j<N$, du support coloré de référence au cours de son processus de formation et la réflectance $R_{fj}$, $1<j<N$, dudit support coloré de référence à la fin de son processus de formation et on détermine par corrélation une fonction mathématique de deuxième ordre donnant la valeur de réflectance d'un support coloré de référence à la fin du processus de fabrication en fonction de la valeur de réflectance du support coloré de référence au cours du processus de fabrication dans la bande j de longueur d'onde du spectre visible, avec $1<j<N$ :

$$Rfj = Fj°( Rij) = aj_*(Rij)^2 + bj_*(Rij) + cj ,$$

- dans une deuxième étape, on mesure en ligne, pour un nombre N de bandes de longueurs d'onde comprises dans le spectre visible, la réflectance Rij, avec 1<j<N, du support coloré en cours de formation et on en déduit la réflectance Rvj, avec 1<j<N, du support coloré virtuel tel qu'il doit être à la fin de son processus de formation en utilisant la formule :

$$Rvj = Fj°( Rij),$$

- dans une troisième étape, on détermine les coordonnées colorimétriques L*, a* et b* de ce support coloré virtuel en utilisant le spectre de réflectance Rvj telle que calculée pour chaque bande de longueur d'onde du spectre visible,
- dans une quatrième étape, on mesure les coordonnées colorimétriques L*, a* et b* du modèle à atteindre,
- dans une cinquième étape, on évalue les écarts colorimétriques ΔL*, Δa* et Δb* entre les coordonnées colorimétriques L*, a* et b* dudit support coloré virtuel et celles du modèle à atteindre,
- dans une sixième étape, on corrige la quantité de colorants ajoutés au cours du processus de formation dudit support coloré de manière à réduire au maximum les écarts colorimétriques ΔL*, Δa* et Δb* déterminées ci-dessus.

Dans une configuration particulière, le nombre N de bandes de longueurs d'onde est proche de 30, les bandes ayant une longueur sensiblement égale à 10 nm.

Dans une autre configuration particulière, les mesures de réflectance sont faites à l'aide d'un spectrocolorimètre.

L'invention a aussi pour objet un dispositif de contrôle de couleur en ligne utilisé lors d'un processus de formation d'un support coloré, comprenant des moyens pour mesurer, pour un nombre N de bandes de longueurs d'onde du spectre visible, la réflectance Rij d'un support coloré de référence au cours de son processus de formation et la réflectance Rfj dudit support coloré de référence à la fin de son processus de formation, des moyens pour déterminer par corrélation une fonction mathématique de deuxième ordre Fj° donnant la valeur de réflectance Rfj dudit support coloré de référence à la fin de son processus de fabrication en fonction de la valeur de réflectance Rij dudit support coloré de référence au cours de son processus de fabrication, des moyens pour mesurer en ligne, pour un nombre N de bandes de longueurs d'onde du spectre visible, la réflectance Rij du support coloré en cours de formation, des moyens pour calculer la réflectance Rvj du support coloré virtuel tel qu'il doit être à la fin de son processus de formation en utilisant la formule Rvj = Fj°(Rij), des moyens pour calculer les coordonnées colorimétriques L*, a* et b* de ce support coloré virtuel en utilisant le spectre de réflectance Rvj telle que calculée pour chaque bande de longueur d'onde du spectre visible, des moyens pour mesurer les coordonnées colorimétriques L*, a*, b* du modèle à atteindre, des moyens pour calculer les écarts colorimétriques ΔL*, Δa* et Δb* entre les coordonnées colorimétriques L*, a* et b* dudit support coloré virtuel et celles du modèle à atteindre et des moyens pour corriger la quantité de colorants ajoutés au cours du processus de formation dudit support coloré de manière à réduire au maximum les écarts colorimétriques ΔL*, Δa* et Δb* déterminées ci-dessus.

Dans une configuration particulière, le dispositif de contrôle de couleur en ligne utilisé lors d'un processus de formation d'un support coloré comprend également des moyens pour afficher sur un écran de contrôle les valeurs de réflectance mesurées, ainsi que tous les résultats de calcul.

Dans une autre configuration particulière, le dispositif de contrôle de couleur en ligne utilisé lors d'un processus de formation d'un support coloré comprend aussi des moyens pour envoyer des données à d'autres dispositifs, notamment au dispositif de formation du support.

Un autre objet de l'invention est un procédé de fabrication d'un support coloré mettant en oeuvre ledit procédé de contrôle de couleur en ligne précédemment décrit, dans lequel on ajoute en milieu aqueux une quantité donnée de colorants à un matériau de base, on mesure la réflectance du support en cours de formation, le support en cours de formation étant encore humide, on détermine la réflectance prévisionnelle du support final, telle que nous la donne le procédé de contrôle de couleur en ligne, on évalue les écarts colorimétriques entre ce support virtuel final et le modèle à atteindre, on modifie selon le cas les quantités de colorants ajoutés en début de procédé de façon à diminuer ces écarts colorimétriques, on réalise le support final.

Dans une configuration préférée de l'invention, le support final est une plaque stratifiée décorative, le matériau de base utilisé étant notamment une pâte cellulosique et le support en cours de formation étant notamment un papier.

Dans une configuration particulière, la mesure de réflectance du support s'effectue dans la partie humide d'une machine à papier, notamment juste après la zone des presses.

Dans une autre configuration particulière, les colorants utilisés sont des pigments ajoutés dans les cuviers situés en amont de la caisse de tête.

**Revendications**

1. Procédé de contrôle de couleur en ligne utilisé lors d'un processus de formation d'un support coloré, dans lequel :

   a) dans une première étape, on mesure, pour un nombre N de bandes de longueurs d'onde comprises dans le spectre visible et pour un nombre P de supports de référence, la réflectance Rij, 1<j<N, du support coloré de référence au début de son processus de formation et la réflectance Rfj, 1<j<N, dudit support coloré de référence à la fin de son processus de formation et on détermine par corrélation une fonction mathématique de deuxième ordre donnant la valeur de réflectance d'un support coloré de référence à la fin du processus de fabrication en fonction de la valeur de réflectance du support coloré de référence au début du processus de fabrication dans la bande j de longueur d'onde du spectre visible, avec 1<j<N :

$$Rfj = Fj^\circ(Rij) = aj_*(Rij)^2 + bj_*(Rij) + cj ,$$

   b) dans une deuxième étape, on mesure en ligne, pour un nombre N de bandes de longueurs d'onde comprises dans le spectre visible, la réflectance Rij, avec 1<j<N, du support coloré en cours de formation au début de son processus de formation et on en déduit la réflectance Rvj, avec 1<j<N, du support coloré virtuel tel qu'il doit être à la fin de son processus de formation en utilisant la formule :

$$Rvj = Fj^\circ(Rij),$$

   c) dans une troisième étape, on détermine les coordonnées colorimétriques L\*, a\* et b\* de ce support coloré virtuel en utilisant le spectre de réflectance Rvj telle que calculée pour chaque bande de longueur d'onde du spectre visible,
   d) dans une quatrième étape, on mesure les coordonnées colorimétriques L\*, a\*, b\* du modèle à atteindre,
   e) dans une cinquième étape, on évalue les écarts colorimétriques ΔL\*, Δa\* et Δb\* entre les coordonnées colorimétriques L\*, a\* et b\* dudit support coloré virtuel et celles du modèle à atteindre,
   f) dans une sixième étape, on corrige la quantité de colorants ajoutés au cours du processus de formation dudit support coloré de manière à réduire au maximum les écarts colorimétriques ΔL\*, Δa\* et Δb\* déterminées ci-dessus.

2. Procédé selon la revendication 1, **caractérisé en ce que** le nombre N de bandes de longueurs d'onde est proche de 30, les bandes ayant une longueur sensiblement égale à 10 nm.

3. Procédé selon la revendication 1 ou 2, **caractérisé en ce que** les mesures de réflectance sont faites à l'aide d'un spectrocolorimètre.

4. Dispositif de contrôle de couleur en ligne utilisé lors d'un processus de formation d'un support coloré, comprenant des moyens pour mesurer, pour un nombre N de bandes de longueurs d'onde du spectre visible, la réflectance Rij d'un support coloré de référence au cours de son processus de formation et la réflectance Rfj dudit support coloré de référence à la fin de son processus de formation, des moyens pour déterminer par corrélation une fonction mathématique de deuxième ordre Fj° donnant la valeur de réflectance Rfj dudit support coloré de référence à la fin de son processus de fabrication en fonction de la valeur de réflectance Rij dudit support coloré de référence au cours de son processus de fabrication, des moyens pour mesurer en ligne, pour un nombre N de bandes de longueurs d'onde du spectre visible, la réflectance Rij du support coloré en cours de formation, des moyens pour calculer la réflectance Rvj du support coloré virtuel tel qu'il doit être à la fin de son processus de formation en utilisant la formule Rvj = Fj°(Ri), des moyens pour calculer les coordonnées colorimétriques L\*, a\* et b\* de ce support coloré virtuel en utilisant le spectre de réflectance Rvj telle que calculée pour chaque bande de longueur d'onde du spectre visible, des moyens pour mesurer les coordonnées colorimétriques L\*, a\* et b\* du modèle à atteindre, des moyens pour calculer les écarts colorimétriques ΔL\*, Δa\* et Δb\* entre les coordonnées colorimétriques L\*, a\* et b\* dudit support coloré virtuel et celles du modèle à atteindre et des moyens pour corriger la quantité de colorants ajoutés au cours du processus de formation dudit support coloré de manière à réduire au maximum les écarts colorimétriques ΔL\*, Δa\* et Δb\* déterminées ci-dessus.

**5.** Dispositif de contrôle de couleur selon la revendication précédente, comprenant des moyens pour afficher sur un écran de contrôle les valeurs de réflectance mesurées, ainsi que tous les résultats de calcul.

**6.** Dispositif de contrôle de couleur selon la revendication 4 ou 5, comprenant des moyens pour envoyer des données à d'autres dispositifs, notamment au dispositif de formation du support.

**7.** Procédé de fabrication d'un support coloré mettant en oeuvre le procédé de contrôle de couleur en ligne selon l'une des revendications 1 à 3, dans lequel :

- On ajoute en milieu aqueux une quantité donnée de colorants à un matériau de base ;
- On mesure la réflectance du support en cours de formation, le support en cours de formation étant encore humide ;
- On détermine la réflectance prévisionnelle du support final, telle que nous la donne le procédé de contrôle de couleur en ligne ;
- On évalue les écarts colorimétriques entre ce support virtuel final et le modèle à atteindre ;
- On modifie selon le cas les quantités de colorants ajoutés en début de procédé de façon à diminuer ces écarts colorimétriques ;
- On réalise le support final.

**8.** Procédé de fabrication selon la revendication précédente, **caractérisé en ce que** le support final est une plaque stratifiée décorative, le matériau de base utilisé étant notamment une pâte cellulosique et le support en cours de formation étant notamment un papier.

**9.** Procédé de fabrication selon la revendication précédente, **caractérisé en ce que** la mesure de réflectance du support s'effectue dans la partie humide d'une machine à papier, notamment juste après la zone des presses.

**10.** Procédé de fabrication selon la revendication 8 ou 9, **caractérisé en ce que** les colorants utilisés sont des pigments ajoutés dans les cuves de la caisse de tête.

**Claims**

**1.** A method of in-line color control used during a process for forming a colored medium, in which :

a) in a first step, the reflectance $R_{ij}$, where $1 < j < N$, of the reference colored medium at the start of its formation process and the reflectance $R_{fj}$, where $1 < j < N$, of said reference colored medium at the end of its formation process are measured, for a number N of wavelength bands lying within the visible spectrum and for a number P of reference media, and a second-order mathematical function, giving the reflectance value of a reference colored medium at the end of the manufacturing process as a function of the reflectance value of the reference colored medium at the start of the manufacturing process in wavelength band j of the visible spectrum, where $1 < j < N$, namely:

$$R_{fj} = F_j°(R_{ij}) = a_j \times (R_{ij})2 + b_j \times (R_{ij}) + c_j ,$$

is determined by correlation;
b) in a second step, the reflectance $R_{ij}$, where $1 < j < N$, of the colored medium being formed is measured in line, for a number N of wavelength bands lying within the visible spectrum, at the start of its formation process and the reflectance $R_{vj}$, where $1 < j < N$, of the virtual colored medium as it must be at the end of its formation process is deduced therefrom using the formula:

$$R_{vj} = F_j°(R_{ij});$$

c) in a third step, the colorimetric coordinates L*, a* and b* of this virtual colored medium are determined using the reflectance spectrum $R_{vj}$ as calculated for each wavelength band of the visible spectrum;

d) in a fourth step, the colorimetric coordinates L*, a*, b* of the model to be achieved are measured;

e) in a fifth step, the colorimetric deviations ΔL*, Δa* and Δb* between the colorimetric coordinates L*, a* and b* of said virtual colored medium and those of the model to be achieved are evaluated; and

f) in a sixth step, the quantity of colorants added during the process for forming said colored medium are corrected so as to reduce as far as possible the colorimetric deviations ΔL*, Δa* and Δb* determined above.

2. The method as claimed in claim 1, **characterized in that** the number N of wavelength bands is about 30, the bands having a length of approximately 10 nm.

3. The method as claimed in claim 1 or 2. **characterized in that** the reflectance measurements are made using a spectrocolorimeter.

4. An in-line color control device used during a process for forming a colored medium, comprising means for measuring, for a number N of wavelength bands in the visible spectrum, the reflectance Rij of a reference colored medium during its forming process and the reflectance Rfj of said reference colored medium at the end of its forming process, means for determining a second-order mathematical function Fj°, giving the reflectance value Rfj of said reference colored medium at the end of its manufacturing process as a function of the reflectance value Rij of said reference colored medium during its manufacturing process, by correlation, in-line means for measuring the reflectance Rij of the colored medium during formation for a number N of wavelength bands in the visible spectrum, means for calculating the reflectance Rvj of the virtual colored medium as it has to be at the end of its forming process using the formula Rvj = Fj°(Rij), means for calculating the colorimetric coordinates L*, a* and b* of this virtual colored medium using the reflectance spectrum Rvj as calculated for each wavelength band of the visible spectrum, means for measuring the colorimetric coordinates L*, a* and b* of the model to be achieved, means for calculating the colorimetric deviations ΔL*, Δa* and Δb* between the colorimetric coordinates L*, a* and b* of said virtual colored medium and those of the model to be achieved and means for correcting the quantity of colorants added during the process for forming said colored medium so as to reduce as far as possible the colorimetric deviations ΔL*, Δa* and Δb* determined above.

5. The color control device as claimed in the preceding claim, including means for displaying the measured reflectance values and all the calculation results on a monitor screen.

6. The color control device as claimed in claim 4 or 5, including means for sending data to other devices, especially to the device for forming the medium.

7. A process for manufacturing a colored medium, implementing the in-line color control method as claimed in one of claims 1 to 3, in which :

- a given quantity of colorants is added in aqueous form to a base material ;
- the reflectance of the medium being formed is measured, the medium being formed still being wet;
- the predicted reflectance of the final medium, as the in-line color control method gives it is determined ;
- the colorimetric variations between this final virtual medium and the model to be achieved are evaluated ;
- the quantities of colorants added at the start of the process are modified, depending on the case, so as to reduce these colorimetric deviations ; and
- the final medium is produced.

8. The manufacturing process as claimed in the preceding claim, **characterized in that** the final medium is a decorative laminate, the base material used being especially a cellulose pulp and the medium being formed being especially a paper.

9. The manufacturing process as claimed in the preceding claim, **characterized in that** the reflectance of the medium is measured at the wet end of a paper machine, especially just after the press zone.

10. The manufacturing process as claimed in claim 8 or 9, **characterized in that** the colorants used are pigments added to the pulp chests of the head box.

**Patentansprüche**

1. Online-Farbkontrollverfahren, das bei einem Vorgang zur Herstellung eines Farbträgers verwendet wird, bei dem:

    a) in einem ersten Schritt für eine Anzahl N von Wellenlängenbändern, die im sichtbaren Spektrum enthalten sind, und für eine Anzahl P von Referenzträgern das Reflexionsvermögen Rij, 1<j<N, des Referenzfarbträgers am Beginn seines Herstellungsverfahrens und das Reflexionsvermögen Rfj, 1 < j < N, des Referenzfarbträgers am Ende seines Herstellungsverfahrens gemessen wird, und durch Korrelation eine mathematische Funktion zweiter Ordnung bestimmt wird, die den Wert des Reflexionsvermögens eines Referenzfarbträgers am Ende des Herstellungsverfahrens in Abhängigkeit vom Wert des Reflexionsvermögens des Referenzfarbträgers am Beginn des Herstellungsverfahrens im Band j mit einer Wellenlänge des sichtbaren Spektrums, mit 1<j<N, ergibt:

$$\texttt{Rfj = Fj°(Rij) = aj*(Rij)²+bj*(Rij)+cj,}$$

    b) in einem zweiten Schritt online für eine Anzahl N von Wellenlängenbändern, die im sichtbaren Spektrum enthalten sind, das Reflexionsvermögen Rij, mit 1<j<N, des Farbträgers während der Herstellung am Beginn seines Herstellungsverfahrens gemessen wird und davon das Reflexionsvermögen Rvj, mit 1<j<N, des virtuellen Farbträgers, wie er am Ende seines Herstellungsverfahrens vorhanden sein soll, abgleitet wird, wobei folgende Formel verwendet wird:

$$\texttt{Fvj = Fj°(Rij),}$$

    c) in einem dritten Schritt die kolorimetrischen Koordinaten L*, a* und b* dieses virtuellen Farbträgers bestimmt werden, wobei das Spektrum des Reflexionsvermögens Rvj verwendet wird, wie es für jedes Wellenlängenband des sichtbaren Spektrums berechnet wurde,
    d) in einem vierten Schritt die kolorimetrischen Koordinaten L*, a*, b* des zu erreichenden Modells gemessen werden,
    e) in einem fünften Schritt die kolorimetrischen Abweichungen ΔL*, Δa* und Δb* zwischen den kolorimetrischen Koordinaten L*, a* und b* des virtuellen Farbträges und jene des zu erreichenden Modells bewertet werden,
    f) in einem sechsten Schritt die Menge von während des Herstellungsverfahrens des Farbträgers hinzugefügten Farbstoffen korrigiert wird, um die oben bestimmten kolorimetrischen Abweichungen ΔL*, Δa* und Δb* maximal zu verringern.

2. Verfahren nach Anspruch 1, **dadurch gekennzeichnet, dass** die Anzahl N von Wellenlängenbändern nahe 30 ist, wobei die Bänder eine Länge von im Wesentlichen gleich 10 nm aufweisen.

3. Verfahren nach Anspruch 1 oder 2, **dadurch gekennzeichnet, dass** die Messungen des Reflexionsvermögens mit Hilfe eines Spektrokolorimeters erfolgen.

4. Vorrichtung zur Online-Farbkontrolle, das bei einem Vorgang zur Herstellung eines Farbträgers verwendet wird, umfassend Mittel, um für eine Anzahl N von Wellenlängenbändern des sichtbaren Spektrums das Reflexionsvermögen Rij eines Referenzfarbträgers während seines Herstellungsverfahrens und das Reflexionsvermögen Rfj des Referenzfarbträgers am Ende seines Herstellungsverfahrens zu messen, Mittel, um durch Korrelation eine mathematische Funktion zweiter Ordnung Fj° zu bestimmen, die den Wert des Reflexionsvermögens Rfj des Referenzfarbträgers am Ende seines Herstellungsverfahrens in Abhängigkeit vom Wert des Reflexionsvermögens Rij des Referenzfarbträgers während seines Herstellungsverfahrens, Mittel, um online für eine Anzahl N von Wellenlängenbändern des sichtbaren Spektrums das Reflexionsvermögen Rij des Farbträgers während der Herstellung zu messen, Mittel, um das Reflexionsvermögen Rvj des virtuellen Farbträgers, wie er am Ende seines Herstellungsverfahrens vorhanden sein soll, zu berechnen, wobei die Formel Rvj = Fj°(Ri) verwendet wird, Mittel, um die kolorimetrischen Koordinaten L*, a* und b* dieses virtuellen Farbträgers zu berechnen, wobei das Spektrum des Reflexionsvermögens Rvj verwendet wird, wie es für jedes Wellenlängenband des sichtbaren Spektrums berechnet wurde, Mittel, um die kolorimetrischen Koordinaten L*, a* und b* des zu erreichenden Modells zu messen, Mittel, um die kolorimetrischen Abweichungen ΔL*, Δa* und Δb* zwischen den kolorimetrischen Koordinaten L*, a* und b* des virtuellen Farbträgers und jene des zu erreichenden Modells zu berechnen, und Mittel, um die Menge von während des Herstellungsverfahrens des Farbträgers hinzugefügten Farbstoffen zu korrigieren, um die oben bestimmten kolorimetrischen Abweichungen ΔL*, Δa* und Δb* maximal zu verringern.

5. Vorrichtung zur Farbkontrolle nach dem vorhergehenden Anspruch, umfassend Mittel, um auf einem Kontrollbildschirm die gemessenen Werte des Reflexionsvermögens sowie alle Berechnungsergebnisse anzuzeigen.

6. Vorrichtung zur Farbkontrolle nach Anspruch 4 oder 5, umfassend Mittel, um Daten an andere Vorrichtungen, insbesondere an die Vorrichtung zur Herstellung des Trägers, zu senden.

7. Verfahren zur Herstellung eines Farbträgers, das das Online-Farbkontrollverfahren nach einem der Ansprüche 1 bis 3 einsetzt, bei dem:

- im wässerigen Medium eine gegebene Menge von Farbstoffen zu einem Basismaterial hinzugefügt wird;
- das Reflexionsvermögen des Trägers während der Herstellung gemessen wird, wobei der Träger bei der Herstellung noch feucht ist;
- das voraussichtliche Reflexionsvermögen des endgültigen Trägers bestimmt wird, das uns das Online-Farbkontrollverfahren anzeigt;
- die kolorimetrischen Abweichungen zwischen diesem virtuellen endgültigen Träger und dem zu erreichenden Modell bewertet werden;
- je nach Fall die zu Beginn des Verfahrens hinzugefügten Farbstoffmengen verändert werden, um diese kolorimetrischen Abweichungen zu verringern;
- der endgültige Träger hergestellt wird.

8. Herstellungsverfahren nach dem vorhergehenden Anspruch, **dadurch gekennzeichnet, dass** der endgültige Träger eine Dekorschichtplatte ist, wobei das verwendete Basismaterial insbesondere eine Zellulosepaste und der herzustellende Träger insbesondere ein Papier ist.

9. Herstellungsverfahren nach dem vorhergehenden Anspruch, **dadurch gekennzeichnet, dass** die Messung des Reflexionsvermögens des Trägers in dem feuchten Teil einer Papiermaschine, insbesondere direkt nach der Presszone, erfolgt.

10. Herstellungsverfahren nach Anspruch 8 oder 9, **dadurch gekennzeichnet, dass** die verwendeten Farbstoffe Pigmente sind, die in die Pulpenwannen des Stoffauflaufs hinzugefügt werden.